# EUROPEAN PATENT APPLICATION

(11) **EP 2 881 159 A1**
(43) Date of publication of application: **10.06.2015**
(21) Application number: 13824776.2
(22) Date of filing: 02.08.2013
(51) Int. Cl.: B01D 50/00

(54) **SYSTEM FOR CAPTURING AND RECOVERING GASES AND PARTICLES**

(30) Priority: 03.08.2012 CL 201202186
(71) Applicant: Morales, Oviedo Heriberto Oriel, 7790594 Santiago (CL)
(72) Inventor: Morales, Oviedo Heriberto Oriel, 7790594 Santiago (CL)
(74) Representative: Rohmann, Michael
(86) International application number: PCT/CL2013/000050
(87) International publication number: WO 2014/019101

(57) **Abstract**

A system for capturing and recovering polluting gases and particles by means of self-priming pumping caused by induced flow pumps which are part of a close circuit of steam under pressure, thereby allowing a high efficiency in the decontamination and cleaning of the gas being extracted from environments having a high concentration of gases and particles, thus achieving low energy requirements and reintegrating the clean air to the atmosphere, also recovering and recycling the condensed steam resource which has been used in the process.

## Description

### Field of Application

The present invention relates to a system for capturing and recovering polluting gases and particles in the air, in a size greater than 75 micrograms per cubic meter, with sizes of 2.5 to 30 micrometers, the methodology having as an objective the task of removing the polluting gas and dust. Said objective being established by the detection of the presence of said polluting gas and dust as well as the cleaning efficiency control.

The recovery and capture systems of polluting gas and dust are installed wherein a high environmental polluting particles concentration is generated, said concentration range being risky to people, the environment and the service life of machines.

Two distinguishing features of these systems are the gases capture as well as the reduction level of emissions of a dust polluting gas extracted from the contaminated gas, which results in apparatuses ensuring the reduction of polluting gas emissions as well as the cleaning of gases with greater or lower efficiency.

### STATE OF THE ART

Cleaning apparatuses have to consider: the feature of the gas, the environmental temperature or the process temperature generated by the gas compound or polluting dust, the water steam condensation, minerals and gases present therein. Cleaning apparatuses also depend on the features of the contaminant due to its abrasive or corrosive condition.

One distinguishing feature of cleaning apparatuses is the one related to the direct energy requirements or auxiliary sources to be used, which in order to be produced, need energy or a process, wherein said energy is obtained as a natural resource. Generally, they are hot gases from a process, air and steam under pressure.

It is important to highlight the degree of efficiency achieved when using natural resources, essentially when the steam is used due to its capacity of being recirculated so as to be used for gas conversion, dust sedimentation or cleaning of polluting emissions. Among the air cleaning apparatuses available in the market and used in the mining field, which is the main utilization field for this invention are found the following:

**Electrostatic Precipitators** are very efficient for cleaning air and cooled-smelter gases which use high potentials of electric fields and its process consists of: gas ionization, charging of dust particles, transport of particles to the collection surface, neutralization and removal of the charge in the collected dust and removal of dust particles.

Dust collectors comprised by fabric sleeve filters having a lower efficiency for cleaning air use the principle of intercepting the polluted air current by using big filters. They use electric power to move the extractors as well as the compressed air at high pressure for removing dust. Its process comprises the stage in which the dust is captured and drawn, the interception of air for the removal of dust particles, trapped in the fabric sleeve filters, pulses of air at high pressure directed towards the sleeves for removing the accumulated dust, collecting the dust dropped by gravity. The clean air at the end of the extractor is directed through the ducts having an outlet towards the atmosphere.

**Dust suppressants** of low efficiency work by means of a dissemination mechanism wherein a fog created with water and air under pressure is used. Thereby creating a moisture dispersion for capturing and precipitating the dust. **Wet Collectors** are not normally used in mining however they are classified as: **Centrifugal Humidifiers** which use the centrifugal force to accelerate the dust particle, impregnating it on some wet surface collectors.

**Wet dynamic precipitators** use water spray in a compartment loaded with dust particles by means of the mechanical separation of the air from the wet dust. **The Venturi-type collector** uses the Venturi effect to absorb gases or dust mixing it with water to channel them towards a separation section.

In the present specification the invention for capturing and recovering gases and particles is detailed, which is an apparatus that uses two aspiration processes one is carried out by means of self-priming units in a steam flow and the other by means of an extractor driven by a motor with speed control. The self-priming units are interspersed in the contaminated air current next to a restriction or elbow having the purpose of disaggregation due to the density of gases and particles present in the contaminated air.

The design of these two processes achieves the following purposes: capturing and recovering gases and particles from air and detecting the environmental pollution by means of an indirect integral measurement of turbidity in the liquid flow and/or by means of an in-line law analyzer in conditions which facilitate the sampling in a medium mixed by turbulence. Aspiration control which is made by means of the control of the speed of steam fluid as well as the speed control of aspirated air.

Handling the residence times of contaminated air in order to make the interaction between the two processes efficient. Maintaining the functionality in time since it permanently has two or more capturing units for the same contamination source. The aforementioned redundancy simplifies the maintenance with the added value of being available in the medium-term for operating. Controlling the cleaning efficiency by means of a second turbidity meter and/or in-line analysis of the present contaminants which is installed in the air outlet to the atmosphere in a liquid circuit of wet dynamic precipitators. The reason of the existence of two turbidity meters and/or analysis is the real-time recording of the compliance of environmental standards as well as the control record of the cleaning efficiency of the apparatus.

Every mineral treatment process generates dust due to the mineral crushing, transfer, transport, sieving and stacking stages. It is important to deliver an apparatus which is adapted to the structural design of the dust-generating process unit. The invention due to its structural simplicity is designed to modify the measures to be used depending on the capture contaminated air volumes and the level of contamination. By means of the control methodology it is possible to modify the parameters linked to the cleaning process.

In order to better understand the invention it will be described based on a preferred embodiment which is illustrated as a design of processes and instruments under ISA standard 5.1 considering it just as an illustrative representation of the invention, not limited to the scope of the invention neither its dimensions nor to the quantity of illustrated elements or to the exemplified fastening means.

### Detailed Description of the Invention

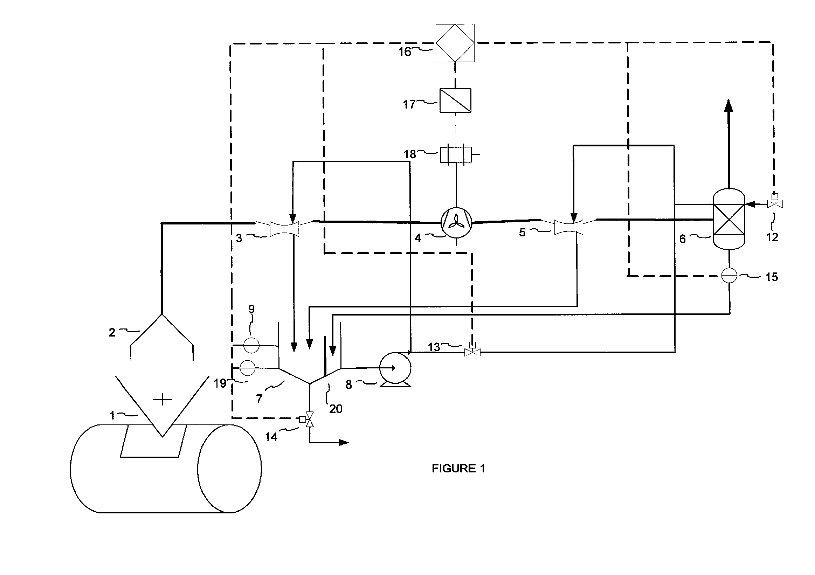

Figure 1 is the general process and instrumentation design of the apparatus for capturing and recovering gases and particles.

The diagram of figure 1 is the diagram of the process, equipment and instrumentation involved in the general explanatory operation of the invention. The main process is initiated in the gases and particles contamination source such as for example, a Pierce-Smith Reactor or Converter 1, the extractor hood 2, the support pipe of self-priming pumps 3 which is the first dragging of gases and particles by aspiration. The induced draft fan or Extractor 4 is the most important agent of aspiration, the second Support pipe of self-priming pumps 5 is also used for dragging the gasses and particles by means of aspiration, the water dynamic precipitator 6 is the last cleaning stage and where the clean air exits to the atmosphere.

The secondary process comprises a separation tank for the accumulation of the captured gases and particles 7, the steam fired boiler 8, solenoid valves for controlling the distilled water feed 12, a steam-feed control valve 13 and a discharge waste valve 14 which are involved in controlling the steam. The turbidity meters 9 and 15 and the tank level meter. The clean distillate enters the dynamic precipitator 6 and the boiler 8.

Both processes are controlled by a Programmable Logic Controller (PLC) 16. It controls the speed of the extractor 4 by means of an analog command into the Variable Frequency Drive 17, thereby controlling the speed of the extractor motor 18. By means of a control algorithm it is possible an aspiration of variable intensity and variable in its times. It controls the start of the system, wherein the steam fired boiler 8 permanently functions at a tank level of 100 millimeters above the level of the accumulation separator of the contaminated distillate 20, controlled by means of a level meter 19. In the tank 7 the aspiration turbidity 9 generated in the induced flow apparatus i 3 is detected. Valves 12 and 13 remain closed unless the level indicates a low risk level for the functioning of the boiler, in said case the valve 12 is opened. The extractor motor 17 when detecting the start of the crushing process 1 receives the start command from the PLC 16, thereby maintaining the programmed control algorithm. The valve 13 is opened and valves 12 and 14 remain closed.

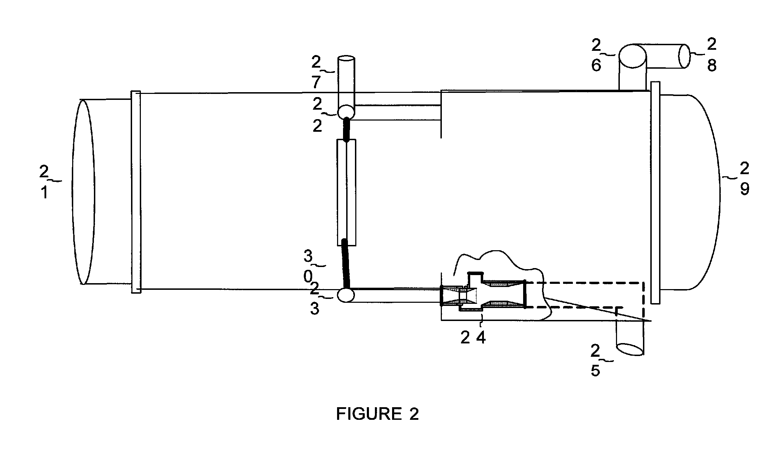

If a high turbidity value is detected in the tank 7, the tank 7 will be discharged by opening the valve 14 and closing the valve 13. Thus, the distillate will be allowed to enter when opening the valve 12. By measuring the turbidity level 15 at the outlet, the ratio between both meters is compared so as to stop the entering of the distillate, valves 14 and 12 are closed and valve 13 is opened. Figure 2 is the objective of the invention and represents the elements indicated as induced flow apparatus 3 and 5 of figure 1.

Figure 2 is the detail of the contaminated gas inlet 21 and the clean gas outlet 29 in the induced flow apparatus, the clean steam inlet 27 as well as the contaminated steam outlet 28.

It is also detailed how the self-priming units are structurally inserted towards the inner part of the induced flow apparatus. In the narrowing 30 of the Venturi pipe is structurally installed a circular manifold 22 from where are distributed the eight lines similar to the aspiration line 23, located at a distance equivalent to the average diameter of the cylindrical section of the contaminated air inlet 21, typical sample of the other lines, in the extracted portion is inwardly visualized the self-priming pump 24 and the outlet of each line 25 towards the manifold 26 to be concentrated on the discharge line 28 when returning to the tank, dust sedimentation element absorbed by the steam/distillate.

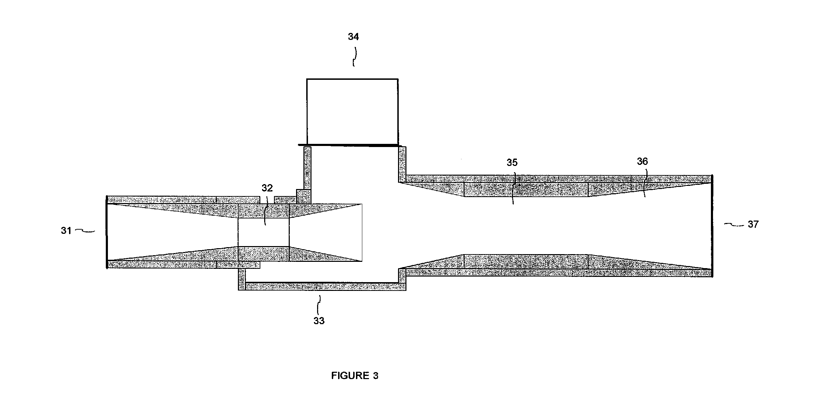

In figure 3 the self-priming pump is detailed as well as how this works inside the induced flow pipe. In the inlet chamber 31 normally are injected liquids or steam at high pressure in order to create suction inside the pump, due to the narrowing and expansion of the nozzle 32. The suction chamber 33 at the discharge nozzle produces the aspiring effect on the suction line 34, thereby suctioning the dust contaminated air, being mixed to exit through a parallel section 35, wherein the diffusor 36 as well as the discharge 37 are at a pressure higher than the one of the suction.

This self-priming pump does not have movable parts and they do not require lubrication.

**Standard for NPT male pipe**

| Inlet (m.m) | Suction/Discharge (m.m) | Measures Factor | Total Length (m.m) |
|---|---|---|---|
| 12.70 | 19.05 | 0.21 | 149.225 |
| 12.70 | 25.40 | 0.34 | 180.975 |
| 19.05 | 31.75 | 0.61 | 228.60 |
| 25.40 | 38.10 | 1.00 | 279.40 |
| 31.75 | 50.80 | 1.82 | 365.125 |
| 38.10 | 63.50 | 3.17 | 460.375 |
| 50.8 | 76.20 | 5.92 | 606.425 |
| 167.53 | 221.62 | 19.52 | 2000 |

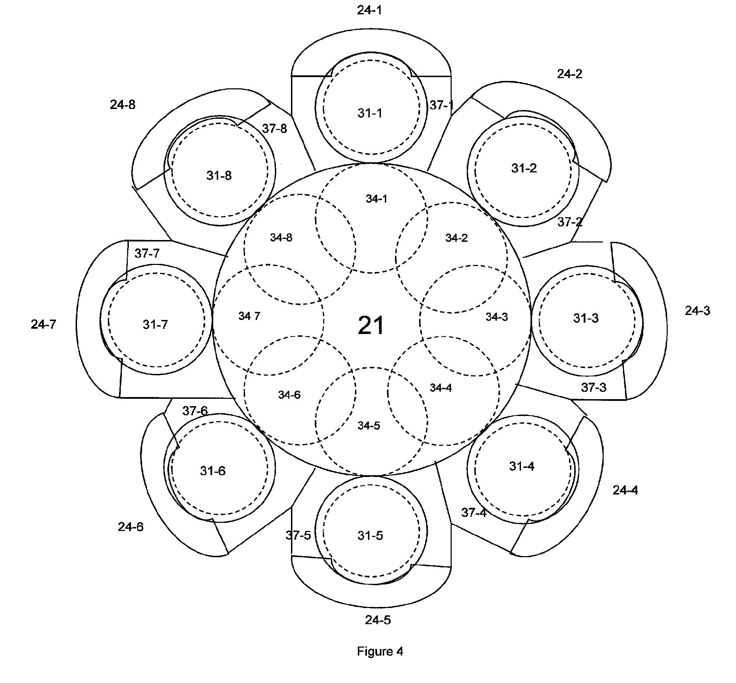

Figure 4 shows the distribution of the large-scale self-priming pumps in a plane which shifts the 8 aforementioned units (each one of them being represented in figure 3) to the inside of the duct which conveys gases and dust 21 and it also shows its distribution as a sub-index from 1 to 8 with the numbering associated to figures 2 and 3. Example: the suction ducts are 34-1, 34-2, 34-3, 34-4, 34-5, 34-6, 34-7, 34-8.

If we assume the needs for capturing and recovering gases and particles from contaminated air in an area requiring air volumes in the order of 14.640 m3/h, this process will require an extraction rate in electric power of 25 HP. If the decontamination demand situation is for a contamination index of 100 microgram/m3 in dust this is a value being 13 times higher than normal values. This means than in one hour 14.64 grams of dust must be captured. The requirement is that our self-priming aspirator must be sensitive to these dimensions. This is the reason why the measurement must be integrated in time to observe a change of turbidity, an appropriate volume would be a liter. Nevertheless when the aspiration demands means for the given air volume to displace 150 l/min, then for 10 minutes a 1500 liter tank is needed or for an hour a 9000 liter tank is needed. Indirectly, it is positive since there is the possibility of recirculating the water until reaching a discharge turbidity of the system and for the entry of clean water.

## Claims

1. A system for capturing and recovering polluting gases and particles by self-priming pumping caused by induced flow pumps (24) which are part of a closed circuit of steam under pressure, thereby allowing a high efficiency in the decontamination and cleaning of the gas extracted from environments having a high gas concentration with particulate dust PM2, thus achieving low energy requirements when reintegrating the clean air to the atmosphere, also recovering and recycling the condensed steam resource used in the process; said system **CHARACTERIZED in that** the system has two main capture or intake stations of gases (3, 5) located in the gas intake or capture ducts (2) wherein the extraction of polluting gases and dust is achieved by means of self-priming pumps (24) in each intake or capture station located in places where the gas conveyor duct changes its diameter or direction at a distance equivalent to the average diameter of the cylindrical section of the contaminated gas inlet (21) and downwards the duct perturbation (30) of the Intake or capture Station wherein each one of this self-priming pumps (24) are located in each one of the lines that are positioned between an inlet circular manifold (22) from which the lines (23) are distributed, being connected to the outlet lines (25) to end up in a manifold (26) wherein the size of the induced flow self-priming pumps (24) must be between 9.5 mm and 50.8 mm depending on the size of the tube where the Intake or capture Station (3, 5) is located; wherein the determined location of each self-priming pump will be complemented with the fact that the suction line (34) of induced flow self-priming pump (24) is oriented towards a place where these can suction the highest quantity of contaminated gases wherein the quantity of contaminated gases is achieved by means of the capability of modifying the residence time of the contaminated air in contact with the suction nozzles of the induced flow self-priming pump (24) achieved by an induced draft fan (4) by the motor of variable speed of the extractor (18) and the working point referenced by a programmable logic controller (PLC) (16) and a variable frequency drive (17) by means of a constant monitoring of turbidity indicated by its meters (9, 15) of the liquid pumping circuit to the induced flow self-priming pumps (24).

2. The system for capturing and recovering polluting gases and particles by self-priming pumping caused by induced flow pumps (24) within a close circuit of steam under pressure of variable speed according to claim 1 **CHARACTERIZED in that** the closed circuit of condensed steam incorporates two in-line turbidity meters and/or metallurgical analyzers (9, 15) having a high sensitivity and resolution which detect the changes in the color of the condensed steam in time, from transparent to turbid, serving as indicators of the concentrated dust in the liquid circuit and/or the quality-quantity of polluting gases.

3. The system for capturing and recovering polluting gases and particles by self-priming pumping caused by induced flow pumps (24) which are part of a close circuit of steam under pressure according to claim 1 **CHARACTERIZED in that** the extraction motor of the induced draft fan of variable speed (18) located at the lower end of the Intake or capture station (3) can take the adjusted speed by means of the programmable logic controller (PLC) which synchronizes the aspiration times intervals, the paused times and the speed of the air current in the induced flow pipe in order to optimize the absorption of contaminated gases in the self-priming pumps of the induced flow type. The control is achieved by means of a programmable logic controller (PLC) which controls the variable frequency drive, thereby allowing to modify the speed of the motor of the induced draft fan. The level of the obtained optimization indicates the degree of change of the turbidity within the closed circuit of condensed steam.
